# EUROPÄISCHE PATENTANMELDUNG

(11) **EP 4 557 601 A1**
(43) Veröffentlichungstag der Anmeldung: **21.05.2025**
(21) Anmeldenummer: 24210886.8
(22) Anmeldetag: 05.11.2024
(51) Int. Cl.: H02P 3/18, E05F 15/603, H02K 11/20, H02K 11/33, H02P 29/02

(54) **ANTRIEBSMOTOR FÜR DREH- UND SCHIEBETÜRANTRIEBE MIT INTEGRIERTER ELEKTRONIK UND SICHERHEITSFUNKTIONEN**

(30) Priorität: 15.11.2023 DE 102023131852
(71) Anmelder: GEZE GmbH, 71229 Leonberg (DE)
(72) Erfinder: Hucker, Matthias, 76359 Marxzell (DE); Hahn, Erhard, 71397 Leutenbach (DE)
(74) Vertreter: Witte, Weller & Partner Patentanwälte mbB

(57) **Zusammenfassung**

Die Erfindung betrifft einen Antrieb für eine Dreh- oder Schiebetür, mit einem Motorgehäuse (22), einem Elektromotor (32), dem eine Motorspannung zuführbar ist, einer Steuereinrichtung (24), die ausgebildet ist, den Elektromotor, insbesondere durch Verändern der Motorspannung, zu steuern, und einer Schnittstelleneinrichtung (26), die mit der Steuereinrichtung (24) verbunden und ausgebildet ist, mit einer externen Steuereinrichtung (16) zu kommunizieren. Der Antrieb ist dadurch gekennzeichnet, dass eine Abschalteinrichtung (36) vorgesehen und ausgelegt ist, bei einer Aktivierung den Elektromotor (32) von der Motorspannung zu trennen, und der Elektromotor (32), die Steuereinrichtung (24), die Schnittstelleneinrichtung (26) und die Abschalteinrichtung (36) dem Motorgehäuse (22) zugeordnet sind. Die Erfindung betrifft ferner ein Antriebssystem mit einem solchen Antrieb.

## Beschreibung

Die vorliegende Erfindung betrifft einen Antrieb für eine Dreh- oder Schiebetür, mit einem Motorgehäuse, einem Elektromotor, dem eine Motorspannung zuführbar ist, einer Steuereinrichtung, die ausgebildet ist, den Elektromotor, insbesondere durch Verändern der Motorspannung, zu steuern, und einer Schnittstelleneinrichtung, die mit der Steuereinrichtung verbunden und ausgebildet ist, mit einer externen Steuereinrichtung zu kommunizieren. Die Erfindung betrifft zudem ein Antriebssystem für ein oder mehrere Dreh- oder Schiebetüren mit einem solchen Antrieb.

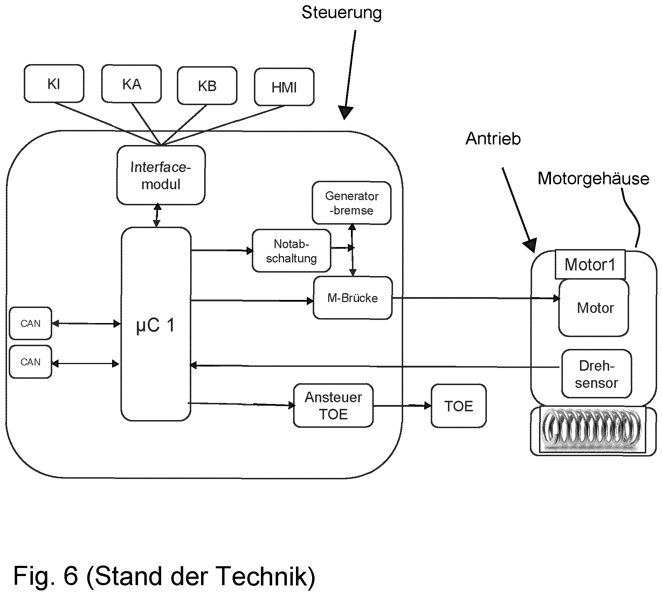

Derartige Antriebe für Dreh- oder Schiebetüren zum Öffnen und Schließen von Gebäudeöffnungen sind allgemein bekannt und werden von der Anmelderin beispielsweise unter dem Namen "Powerturn" angeboten. In Figur 6 ist der grundsätzliche Aufbau eines solchen Antriebs schematisch dargestellt. Zu erkennen sind zwei voneinander unabhängige Komponenten, nämlich einerseits der Antrieb und andererseits die Steuerung. Der Antrieb umfasst einen Motor, beispielsweise einen Bürstenmotor oder auch einen bürstenlosen Motor, sowie einen Drehgeber und optional einen Temperatursensor am Motor. Die Steuerung umfasst eine Motoransteuerung, beispielsweise eine H-Brücke, eine Auswertung der Drehgeber-Signale, eine Auswertung des Temperatursignals, eine Sicherheitsabschaltung der Motorwicklung und eine Schaltung für ein generatorisches Bremsen. Zwischen den beiden Komponenten Steuerung und Antrieb ist eine umfangreiche Verkabelung erforderlich. Darüber hinaus ist die Steuerung auf den zugehörigen Antrieb exakt abgestimmt.

Obgleich sich diese Türantriebe in der Praxis bewährt haben, besteht weiterhin der Wunsch, Verbesserungen vorzunehmen, beispielsweise im Hinblick auf den erforderlichen Verkabelungsaufwand oder die Flexibilität der Antriebe.

Vor diesem Hintergrund besteht eine Aufgabe der vorliegenden Erfindung darin, den vorgenannten Antrieb so weiterzubilden, dass eine einfachere Verkabelung möglich ist und der Antrieb flexibler einsetzbar ist.

Diese Aufgabe wird bei dem vorgenannten Antrieb dadurch gelöst, dass eine Abschalteinrichtung vorgesehen und ausgelegt ist, bei einer Aktivierung den Elektromotor von der Motorspannung zu trennen, und der Elektromotor, die Steuereinrichtung, die Schnittstelleneinrichtung und die Abschalteinrichtung dem Motorgehäuse zugeordnet sind.

D. h. mit anderen Worten, dass die vorgenannten Komponenten, nämlich die Abschalteinrichtung, der Elektromotor, die Steuereinrichtung und die Schnittstelleneinrichtung alle im Motorgehäuse und/oder am Motorgehäuse angeordnet sind. Der Antrieb mit den vorgenannten Komponenten bildet folglich eine Baueinheit, die durch das Motorgehäuse definiert ist. Der Antrieb enthält folglich alle erforderlichen funktionalen Komponenten, die zum Betrieb des Motors selbst erforderlich sind. Der Antrieb muss lediglich mit einer Versorgungsspannung versorgt werden, um den Motor zu betreiben. Um einen gesteuerten Betrieb zu ermöglichen, ist zusätzlich noch eine Datenverbindung mit einer zentralen Steuereinrichtung erforderlich, die jedoch nur "einfache" Fahrbefehle senden muss. Die spezifische Steuerung des Motors erfolgt durch die Steuerungseinrichtung im Motorgehäuse selbst.

Dieser Aufbau des Antriebs führt zu einigen Vorteilen. So sind beispielsweise keine Leitungen mit hochfrequenten Signalen zwischen der zentralen Steuereinrichtung und dem Antrieb notwendig, was zu einem verbesserten EMV-Verhalten führt. Ferner ist eine Wärmeabfuhr über das Motorgehäuse möglich. Durch kurze Leitungswege zu den Motorwicklungen entstehen weniger Verluste, was im Hinblick auf den Energieverbrauch von Vorteil ist. Da die Motorsteuerungsaufgaben durch die Steuerungseinrichtung im Motorgehäuse vorgenommen wird, können optimal an den Motor angepasste Steuerungseinrichtungen, beispielsweise in Form von Mikrokontrollen, verwendet werden.

Ein weiterer Vorteil ist darin zu sehen, dass die Abschalteinrichtung, die ebenfalls im Motorgehäuse vorgesehen ist, optimal an den Motor angepasst werden kann.

Ein weiterer Vorteil ist auch darin zu sehen, dass ein modularer und flexibler Aufbau zwischen der zentralen Steuerungseinrichtung und dem Antrieb möglich ist, sodass beispielsweise auch zweiflügelige Drehtüren mit zwei Antrieben und einer gemeinsamen zentralen Steuerung realisierbar sind. Schließlich ermöglicht der erfindungsgemäße Antrieb auch den Aufbau eines Türantriebs für Schiebetüren mit einer zentralen Steuerung und zwei Antrieben, die über die gemeinsame zentrale Steuereinrichtung gesteuert werden. Sind die beiden eingesetzten Antriebe beispielsweise unterschiedlich, so ist es dennoch möglich, die zentrale Steuerungseinrichtung für beide Antriebe zu verwenden.

Die Aufgabe der vorliegenden Erfindung wird damit vollkommen gelöst.

Bei einer bevorzugten Weiterbildung wird die Motorspannung von einer Leistungselektronik, insbesondere einer Brückenschaltung, insbesondere einer H-Brückenschaltung bereitgestellt, wobei die Leistungselektronik über die Steuereinrichtung steuerbar ist, wobei die Abschalteinrichtung zwischen Leistungselektronik und Elektromotor vorgesehen ist.

Der Vorteil dieser Maßnahme ist darin zu sehen, dass gerade die Leistungselektronik, die auf den Motor abgestimmt sein muss, Teil des Antriebs ist und damit besonders gut auf den Motor abgestimmt sein kann.

Bei einer bevorzugten Weiterbildung weist die Abschalteinrichtung zumindest ein elektrisches Schaltelement auf, wobei das Schaltelement vorzugsweise ein Relais oder ein Transistor ist.

Diese Maßnahme hat sich bezüglich des erforderlichen technischen Aufwands als besonders vorteilhaft herausgestellt.

Bei einer bevorzugten Weiterbildung ist eine Überwachungseinrichtung vorgesehen, die ausgebildet ist, die Steuereinrichtung, die Motorspannung und/oder die Leistungselektronik zu überwachen und in einem Fehlerfall die Abschalteinrichtung zu aktivieren. Besonders bevorzugt weist die Überwachungseinrichtung eine Watchdog-Schaltung auf.

Diese Maßnahme hat sich als besonders vorteilhaft herausgestellt, da die Unterbringung einer Überwachungseinrichtung innerhalb des Motorgehäuses eine sehr gute Anpassung zulässt.

Bei einer bevorzugten Weiterbildung ist die Steuereinrichtung ausgelegt, die Abschalteinrichtung zu aktivieren. D. h. mit anderen Worten, dass die Steuereinrichtung beispielsweise ein Schaltsignal an die Abschalteinrichtung übermittelt, um die Energieversorgung des Motors zu unterbrechen.

Diese Maßnahme hat den Vorteil, dass die Abschaltung flexibel unter Nutzung unterschiedlicher Parameter vorgenommen werden kann.

Bei einer bevorzugten Weiterbildung ist eine Bremseinrichtung vorgesehen, die ausgebildet ist, den Elektromotor bei fehlender Motorspannung generatorisch abzubremsen, wobei die Bremseinrichtung dem Motorgehäuse zugeordnet ist. D. h. mit anderen Worten, dass auch die Bremseinrichtung am Motorgehäuse oder innerhalb des Motorgehäuses vorgesehen und damit Teil des Antriebs ist.

Der Vorteil dieser Maßnahme ist darin zu sehen, dass sich über die Bremseinrichtung eine definierte Abbremsung der Tür beim Schließvorgang realisieren lässt. Darüber hinaus hat die Unterbringung der Bremseinrichtung im Motorgehäuse den Vorteil, dass keine Leitungen zu einer externen Bremsschaltung erforderlich sind. Das Ausfallrisiko wird damit deutlich reduziert. Darüber hinaus ist es auch nicht möglich, dass die Bremseinrichtung bei einem unkontrollierten Abklemmen der Motorleitung ausfallen kann. Das reduziert die Gefahr für einen Servicetechniker durch schlagende Hebel bei Drehtürantrieben mit Schließelement.

Bei einer bevorzugten Weiterbildung ist die Abschalteinrichtung ausgebildet, um die Bremseinrichtung zu aktivieren. D. h. mit anderen Worten, dass beispielsweise das Abschaltelement der Abschalteinrichtung die Leitung zwischen Leistungselektronik und Elektromotor nicht nur trennt, sondern die Bremseinrichtung mit dem Elektromotor verbindet.

Diese Maßnahme hat den Vorteil, dass sich die Aktivierung der Bremseinrichtung einfach realisieren lässt.

Bei einer bevorzugten Weiterbildung ist die Steuereinrichtung ausgebildet, die Bremseinrichtung zu steuern oder zu regeln. D. h. mit anderen Worten, dass der Bremsverlauf steuerbar oder regelbar ist. Der Abbau der Energie, die vom Elektromotor während des generatorischen Betriebs geliefert wird, lässt sich folglich über die Steuereinrichtung einstellen oder regeln. Alternativ könnte diese Steuerung bzw. Regelung auch von einem Bremssteuerelement ausgeführt werden, das Teil der Bremseinrichtung ist.

Diese Maßnahmen haben den Vorteil, dass die einer Schließkraft entgegenwirkende Bremskraft während des Schließvorgangs steuerbar ist, sodass definierte Schließvorgänge realisierbar sind.

Bei einer bevorzugten Weiterbildung ist eine Energierückgewinnungseinrichtung vorgesehen, die ausgelegt ist, beim generatorischen Abbremsen eine Spannung zur Versorgung der Steuereinrichtung und/oder der Bremssteuereinrichtung bereitzustellen, wobei die Energierückgewinnungseinrichtung dem Motorgehäuse zugeordnet ist. D. h. mit anderen Worten, dass auch die Energierückgewinnungseinrichtung am oder innerhalb des Motorgehäuses vorgesehen ist und damit Teil des Antriebs ist.

Der Vorteil dieser Maßnahme ist darin zu sehen, dass auch bei Wegfall einer Energieversorgung ein definiertes Schließen der Tür möglich ist, da beispielsweise die Steuerungseinrichtung über die Energierückgewinnungseinrichtung mit Energie versorgt werden kann.

Bei einer bevorzugten Weiterbildung ist zumindest ein dem Elektromotor zugeordneter Drehgeber vorgesehen, um der Steuereinrichtung ein Drehwinkelsignal bereitzustellen, welches die absolute und/oder relative Drehwinkelposition eines Rotors des Elektromotors angibt.

Diese Maßnahme hat den Vorteil, dass keine Leitung zu einer externen Steuerung notwendig ist, sodass beispielsweise die Gefahr eines Kurzschlusses oder eines Leitungsbruchs einer Leitung vom Drehgeber zu der entsprechenden Steuerung sehr gering ist. Darüber hinaus fällt die Überwachung der Drehgeberleitung auf Kurzschluss oder Leitungsbruch weg. Schließlich muss auch keine Abschirmung der Drehgeberleitung gegen Störstrahlung vorgenommen werden.

Bei einer bevorzugten Weiterbildung ist die Schnittstelleneinrichtung eine serielle Schnittstelleneinrichtung, insbesondere eine CAN-Bus-Schnittstelleneinrichtung. Weiter bevorzugt ist dem Motorgehäuse und/oder dem Motor zumindest ein Temperatursensor zugeordnet, der der Steuereinrichtung ein Temperatursignal bereitstellt. Weiter bevorzugt ist der Elektromotor als bürstenloser Gleichstrommotor oder als Torquemotor ausgebildet. Alternativ kann der Elektromotor auch ein Gleichstrom-Bürstenmotor sein. Weiter bevorzugt ist dem Elektromotor ein weiterer Elektromotor zugeordnet, um einen redundanten Antrieb bereitzustellen.

Diese Maßnahmen haben sich als besonders vorteilhaft herausgestellt, insbesondere um die Zuverlässigkeit des Antriebs zu erhöhen.

Bei einer bevorzugten Weiterbildung weist die Steuereinrichtung einen Datenspeicher auf, der ausgelegt ist, Parameter, wie Öffnungsweite und Bremszeit, und/oder Fehlerdaten und/oder Herstelldaten und/oder Zyklusdaten zu speichern.

Diese Maßnahme hat unter anderem den Vorteil, dass bestimmte Parameter werkseitig abgespeichert werden können, sodass der Antrieb perfekt auf die Anwendung abgestimmt werden kann. Selbstverständlich ist es alternativ oder zusätzlich auch denkbar, dass bestimmte Parameter auch von der zentralen Steuerungseinrichtung übertragen werden. Schließlich könnten bestimmte Parameter auch von einem Servicetechniker eingespielt werden.

Die der Erfindung zugrunde liegende Aufgabe wird auch von einem Antriebssystem für ein oder mehrere Dreh- oder Schiebetüren gelöst, das zumindest einen erfindungsgemäßen Antrieb und eine zentrale Steuereinrichtung aufweist, die eine Schnittstelleneinrichtung zur Kommunikation mit der Schnittstelleneinrichtung des zumindest einen Antriebs aufweist, wobei die zentrale Steuereinrichtung Fahrbefehle erzeugt und diese dem zumindest einen Antrieb sendet.

Wie zuvor bereits angedeutet, hat dieses Antriebssystem den Vorteil, dass auch mehrere Antriebe mit nur einer einzigen zentralen Steuerungseinrichtung betrieben werden können.

Bei einer bevorzugten Weiterbildung sind zumindest zwei erfindungsgemäße Antriebe vorgesehen, wobei die zentrale Steuereinrichtung Fahrbefehle an die zumindest zwei Antriebe sendet. Zusätzlich oder alternativ kann auch vorgesehen sein, dass die Steuereinrichtung eines Antriebs einen Fahrbefehl an die Steuereinrichtung eines anderen Antriebs überträgt, um die Antriebe aufeinander abzustimmen.

Diese Maßnahme hat den Vorteil, dass bei mehrflügeligen Türen eine Schließfolge oder Öffnungsfolge einstellbar ist.

Bei einer bevorzugten Weiterbildung ist die zentrale Steuereinrichtung ausgelegt, Fahrbefehle für die zumindest zwei Antriebe so zu erzeugen, dass eine vorbestimmte Schließfolge oder Öffnungsfolge erreicht wird.

Diese Maßnahme hat den Vorteil, dass mit einer einzigen zentralen Steuerungseinrichtung auch mehrflügelige Türen perfekt steuerbar sind.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Vorteile und Ausgestaltungen der Erfindung ergeben sich aus der Beschreibung und der beiliegenden Zeichnung. Dabei zeigen:
- Fig. 1: eine schematische Darstellung eines Türantriebs;
- Fig. 2: ein schematisches Blockdiagramm eines Antriebssystems mit einem erfindungsgemäßen Antrieb und einer zentralen Steuerungseinrichtung;
- Fig. 3: ein schematisches Blockdiagramm eines Antriebssystemseine gemäß einer weiteren Ausführungsform;
- Fig. 4: ein schematisches Blockdiagramm eines Antriebssystems gemäß einer weiteren Ausführungsform;
- Fig. 5: ein schematisches Blockdiagramm eines erfindungsgemäßen Antriebs; und
- Fig. 6: ein schematisches Blockdiagramm eines Antriebsystems aus dem Stand der Technik.

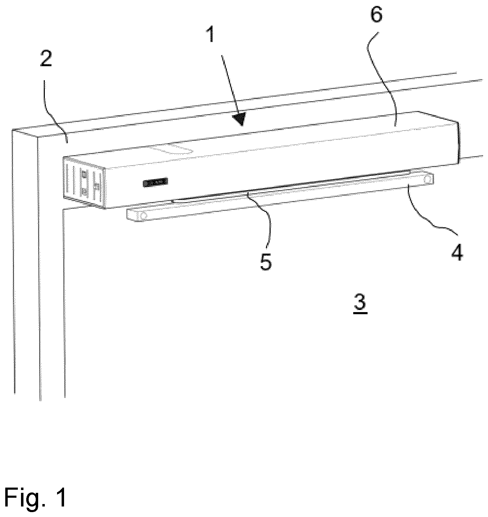

In Figur 1 ist in schematischer Darstellung ein Türantrieb 1 gezeigt, der zum Öffnen und Schließen beispielsweise einer einflügeligen Drehtür 3 zum Öffnen und Schließen einer Gebäudeöffnung vorgesehen ist. Der Türantrieb 1 weist einen Dreharm 5 auf, dessen eines Ende in einer Gleitschiene 4 gehalten ist. Die Gleitschiene 4 ist an der Drehtür 3 befestigt und das andere Ende des Dreharms 5 ist mit einem Antrieb gekoppelt. Dieser Antrieb ist in einem Gehäuse 6 untergebracht. Das Gehäuse 6 weist üblicherweise einen Anschluss für eine Stromversorgung und gegebenenfalls auch einen Anschluss für eine Datenverbindung auf.

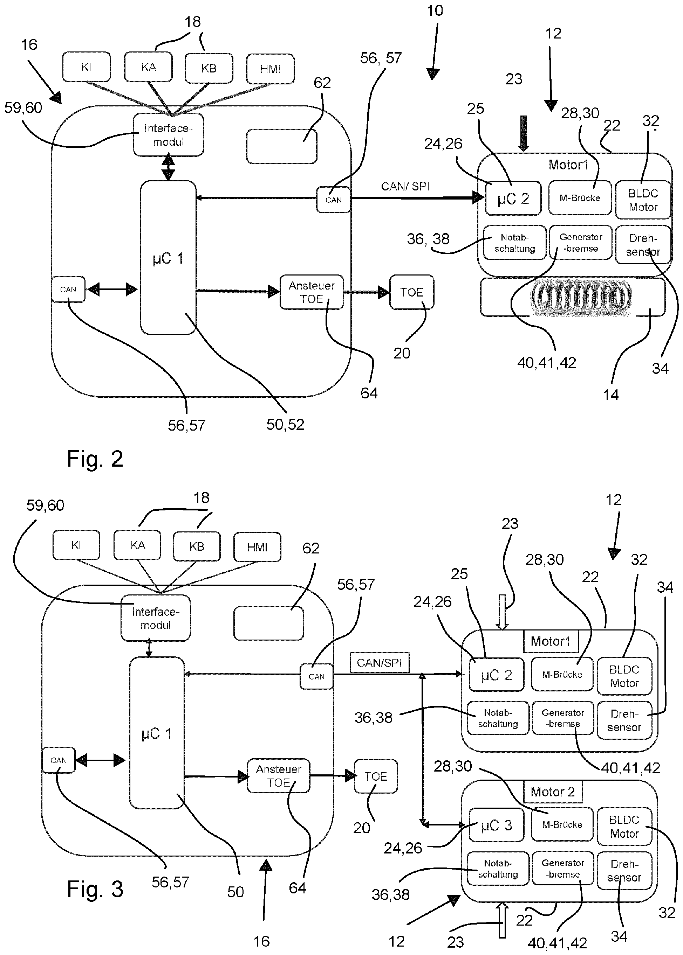

In Figur 2 sind nun zwei Komponenten eines solchen Türantriebs 1 dargestellt, die ein Antriebssystem 10 bilden. Dieses Antriebssystem 10 umfasst einen Antrieb 12, optional ein Schließelement 14, in Form eines Energiespeichers, bspw. einer Feder, sowie eine zentrale Steuereinrichtung 16. Die genannten Komponenten sind in dem Gehäuse 6 untergebracht.

Obgleich in Figur 1 ein Türantrieb 1 für eine Drehtür gezeigt ist, kann das hier beschriebene Antriebssystem 10 auch für Schiebetüren eingesetzt werden.

Die zentrale Steuereinrichtung 16 kommuniziert einerseits mit dem Antrieb 12 beispielsweise über einen seriellen Datenbus, vorzugsweise einen CAN-Bus, und andererseits mit verschiedenen externen Signalgebern 18, beispielsweise über drahtgebundene Verbindungen. Bei diesen externen Signalgebern 18 kann es sich um Kontaktgeber an der Tür, Meldegeräte, wie Schlüsseltaster, etc. handeln.

Die Figur 2 lässt noch erkennen, dass die zentrale Steuereinrichtung 16 mit einem Türöffner 20 kommuniziert, um zum Öffnen der Drehtür den Türöffner freizugeben.

Der Antrieb 12 weist ein vorzugsweise geschlossenes Motorgehäuse 22 auf, in welchem eine Steuereinrichtung 24, ein Datenspeicher 25, eine Schnittstelle 26, eine Motoransteuerung bzw. Leistungselektronik 28, die beispielsweise als H-Brücke 30 ausgebildet ist, ein Motor 32, der beispielsweise als bürstenloser Gleichstrommotor ausgebildet ist, zumindest ein Sensor 34, eine Abschalteinrichtung 36 mit zumindest einem Schaltelement 38 sowie eine Bremseinrichtung 40, der optional eine Energierückgewinnungseinrichtung 42 zugeordnet ist, untergebracht sind. Die vorgenannten Komponenten des Antriebs 12 sind vorzugsweise innerhalb des Motorgehäuses 22 vorgesehen, sodass der Antrieb 12 mit diesen funktionalen Komponenten als eine Einheit handhabbar ist. Selbstverständlich wäre es auch denkbar, dass bestimmte dieser vorgenannten Komponenten, beispielsweise zu Kühlungszwecken, an der Außenseite des Motorgehäuses 22 angebracht sind. In beiden Fällen ist der Antrieb 12 jedoch als eine in sich geschlossene Baueinheit ausgebildet.

Einer der Sensoren 34 kann beispielsweise ein Temperatursensor sein, der die Temperatur des Motors 32 erfasst. Ein anderer der Sensoren 34 kann ein Drehgeber sein, der der Steuereinrichtung 24 ein Drehwinkelsignal bereitstellt, welches absolute und/oder relative Drehwinkelpositionen eines Rotors des Elektromotors angibt.

Der Antrieb 12 weist zumindest zwei Anschlüsse, beispielsweise in Form von Steckkontakten, auf, die einerseits eine Verbindung mit einer Spannungsversorgung 23 und andererseits eine Verbindung mit dem seriellen Datenbus ermöglichen, um mit der zentralen Steuereinrichtung 16 kommunizieren zu können.

Die zentrale Steuereinrichtung 16, die baulich unabhängig vom Antrieb 12 ausgebildet und lediglich über den seriellen Datenbus mit dem Antrieb 12 verbunden ist, weist eine Steuerung 50 mit beispielsweise einem Mikrocontroller 52 auf, sowie eine erste Schnittstelle 56, die beispielsweise als CAN-Bus Schnittstelle 57 ausgebildet ist, und eine zweite Schnittstelle 59, die als drahtgebundene Schnittstelle 60 ausgebildet ist. Ferner weist die zentrale Steuereinrichtung 16 bevorzugt einen Datenspeicher 62 zum Speichern unterschiedlicher Parameter, wie Öffnungsweite, Bremszeit, Zykluszähler, Herstellerdaten, Fehlersignale, etc., und ein Ansteuerungselement 64 für den Türöffner 20 auf.

An dieser Stelle sei angemerkt, dass die zentrale Steuereinrichtung 16 selbstverständlich noch weitere Elemente aufweisen kann, die jedoch für die Erläuterung der erfindungsgemäßen Ausführungsform nicht von Bedeutung sind.

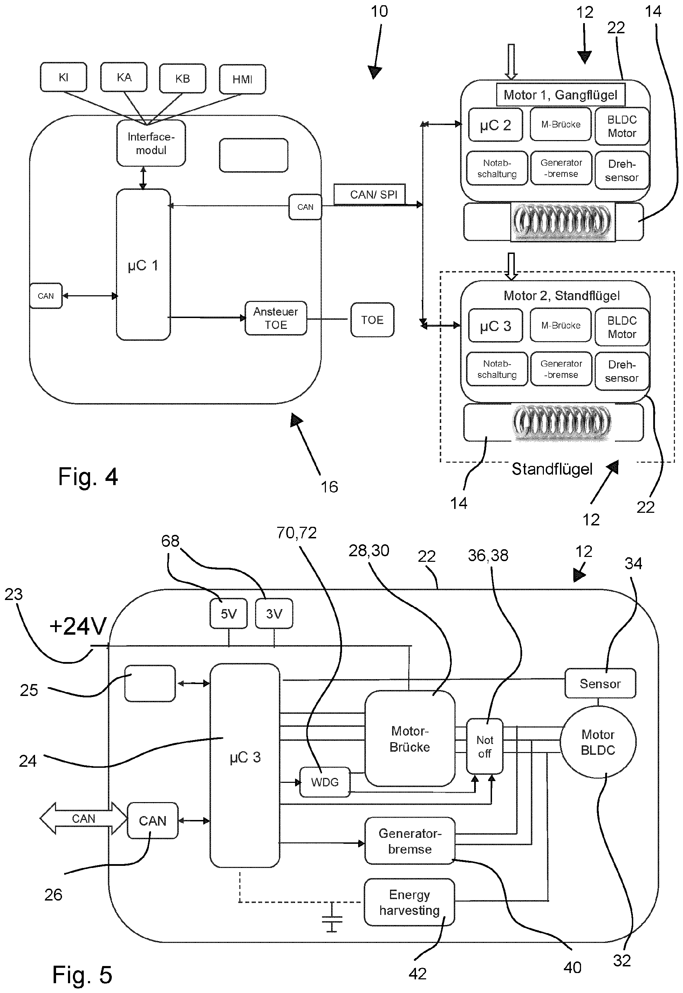

Mit Bezug auf die Figur 5 wird nachfolgend der Aufbau des Antriebs 12 und dessen Komponenten im Motorgehäuse 22 näher erläutert.

Der Antrieb 12 erhält über die Spannungsversorgung 23 die für den Betrieb erforderliche Energie, beispielsweise in Form einer 24 V Spannung. Je nach Bedarf wird diese Spannung über einen Spannungswandler 68 in kleinere Spannungen, beispielsweise 5 V oder 3 V reduziert, um die elektronischen Komponenten versorgen zu können.

Der Motor 32 wird in bekannter Weise über die als H-Brücke 30 ausgelegte Motoransteuerung bzw. Leistungselektronik 28 angesteuert, sodass sowohl Drehzahl als auch Drehrichtung des Motors 32 eingestellt werden können. Die Steuerung der Motoransteuerung 28 und damit des Motors 32 erfolgt über die Steuereinrichtung 24, die ihrerseits einzelne Fahrbefehle von der zentralen Steuereinrichtung 16 über die Schnittstelle 26 erhält. D. h. mit anderen Worten, dass die Steuereinrichtung 24 des Antriebs 12 lediglich einen Fahrbefehl "Öffnen" oder "Schließen" erhält, und die Steuereinrichtung 24 dann eigenständig ohne die zentrale Steuereinrichtung die Ansteuerung des Motors 32 übernimmt, bspw. entsprechend einem vordefinierten Öffnungs- oder Schließverlauf, dessen Parameter in dem Datenspeicher 25 abgelegt sein können.

Zwischen der Motorsteuerung 28 und dem Motor 32 ist die Abschalteinrichtung 36 vorgesehen, die dazu dient, im Notfall die Energieversorgung des Motors 32 zu unterbrechen. Die Abschalteinrichtung 36 weist hierfür ein oder mehrere Abschaltelemente 38 auf, die beispielsweise als Relais oder Transistoren ausgebildet sind. Die Abschaltelemente 38 unterbrechen eine oder mehrere elektrische Leitungen zwischen Motoransteuerung 28 und Motor 32. An dieser Stelle sei jedoch der Hinweis erlaubt, dass die Abschalteinrichtung 36 auch an anderer Stelle vorgesehen sein kann, beispielsweise zwischen Steuereinrichtung 24 und Motoransteuerung 28. Auch so ist es möglich, die Energieversorgung zum Motor 32 im Notfall abzuschalten.

Das Auslösen eines Notfalls, d. h. die Ansteuerung der Abschalteinrichtung 36, erfolgt beispielsweise über die zentrale Steuereinrichtung 24 oder eine Überwachungseinrichtung 70, die beispielsweise als Watchdog-Schaltung 72 ausgebildet ist. Die Watchdog-Schaltung 72 überwacht insbesondere die Motoransteuerung 28 und sendet im Fehlerfall ein Abschaltsignal an die Abschalteinrichtung 36. Die Watchdog-Schaltung 72 kann auch die Steuereinrichtung 24 überwachen und im Fehlerfall eine Abschaltung auslösen. Zusätzlich übernimmt auch die Steuereinrichtung 24 eine Überwachungsfunktion des Antriebs 12, beispielsweise die Überwachung der Temperatur über den Sensor 34, der am Motor 32 oder am Motorgehäuse 22 vorgesehen ist. Sollte die Temperatur einen bestimmten vorgegebenen Wert überschreiten, sendet die Steuereinrichtung 24 ein Abschaltsignal an die Abschalteinrichtung 36.

Die Bremseinrichtung 40 ist mit beispielsweise zwei der elektrischen Leitungen zwischen Motoransteuerung 28 und Motor 32 verbunden und kann über die Steuereinrichtung 24 angesteuert werden. Die Bremseinrichtung 40 dient grundsätzlich dazu, den Motor 32 generatorisch abzubremsen, wenn die Tür 3 beispielsweise über das Schließelement 14 in die Schließstellung gebracht wird. Der Motor 32 arbeitet dabei als Generator und erzeugt Energie, die in der Bremseinrichtung 40 vorzugsweise definiert verbraucht wird und so eine Bremskraft erzeugt, die der Schließkraft entgegenwirkt. Im einfachsten Fall weist die Bremseinrichtung 40 passive Bauelemente, bspw. Dioden und Widerstände, auf, die die Energie in Wärme umsetzen. Der Verlauf der Bremskraft, die der Motor 32 erzeugt, lässt sich dabei nicht steuern. In einem alternativen Fall weist die Bremseinrichtung 40 Bauelemente auf, die ausgelegt sind, den Verlauf der vom Motor 32 erzeugten Bremskraft zu steuern, sodass die Schließgeschwindigkeit und/oder der Schließkraftverlauf der Tür gesteuert werden kann. Die Steuerung des Bremskraftverlaufs kann dabei über die Steuereinrichtung 24 erfolgen oder kann alternativ durch ein Bremssteuerelement 41 der Bremseinrichtung 40 vorgenommen werden, wobei dann die notwendigen Steuerparameter im Datenspeicher 25 abgelegt sind.

Die Ansteuerung bzw. Aktivierung der Bremseinrichtung 40 kann beispielsweise über die Abschalteinrichtung 36 erfolgen und/oder über die Steuereinrichtung 24. Erhält beispielsweise die Abschalteinrichtung 36 im Fehlerfall ein Abschaltsignal, wird die elektrische Verbindung zwischen Motoransteuerung 28 und Motor 32 getrennt, wobei dann die Bremseinrichtung 40 über die Abschalteinrichtung 36 aktiviert wird. Die vom Motor 32 erzeugte Energie fließt in diesem Fall zur Bremseinrichtung 40, um dort gesteuert oder ungesteuert vernichtet zu werden. Selbstverständlich ist es auch denkbar, die Bremsfunktion der Bremseinrichtung 40 unabhängig von einem Fehlerfall beim Schließen der Tür zu nutzen. In einem solchen Fall aktiviert die Steuereinrichtung 24 die Bremseinrichtung 40 und sendet bei Bedarf auch ein Abschaltsignal an die Abschalteinrichtung 36, sodass die vom Motor 32 erzeugte Energie vollständig zur Bremseinrichtung 40 fließen kann.

Bei dem in Figur 5 gezeigten Ausführungsbeispiel weist der Antrieb 12 die optionale Energierückgewinnungseinrichtung 42 auf, die ausgebildet ist, die vom Motor 32 erzeugte Energie im Bremsfall zu nutzen, um elektronische Komponenten, insbesondere die Steuereinrichtung 24, des Antriebs 12 zu versorgen. Das ist insbesondere dann hilfreich, wenn die Spannungsversorgung 23 ausfällt und die Tür 3 dennoch gesteuert schließen soll.

Wie zuvor bereits ausgeführt, sind die Komponenten des Antriebs 12 innerhalb des Motorgehäuses 22 und/oder an der Außenseite des Motorgehäuses 22 vorgesehen. Der Antrieb 12 ist folglich mit all den zuvor erläuterten funktionalen Komponenten als eine Baueinheit ausgeführt, die innerhalb des Gehäuses 6 dann lediglich mit der Spannungsversorgung 23 und der zentralen Steuereinrichtung 16 verbunden werden muss. Die zentrale Steuereinrichtung 16 liefert im Betrieb des Türantriebs lediglich Fahrbefehle über die serielle Datenverbindung an den Antrieb 12, der dann selbstständig die Öffnung bzw. Schließung der Tür mit dem gewünschten Öffnungs- bzw. Schließverlauf durchführt. Die Fahrbefehle selbst können über einen der Signalgeber 18 durch einen Benutzer ausgelöst werden.

Der vorgenannte Aufbau mit den verschiedenen funktionalen Komponenten innerhalb des Motorgehäuses 22 des Antriebs 12 lässt es zu, dass die zentrale Steuereinrichtung 16 nicht nur einen Antrieb 12, sondern zwei oder mehr Antriebe 12, die baugleich ausgeführt sein können, ansteuert. So ist es, wie beispielsweise in Figur 3 dargestellt, möglich, zwei Antriebe 12 als redundantes Antriebssystem für eine Schiebetür zu verbinden, die dann über eine einzige zentrale Steuereinrichtung 16 angesteuert werden. Die zentrale Steuereinrichtung 16 sendet dabei über die serielle Datenverbindung die Fahrbefehle an die beiden Antriebe 12, wobei dann einer der beiden Antriebe 12 die Schiebetür öffnet oder schließt.

in Figur 4 ist eine Anordnung dargestellt, bei der zwei Antriebe 12 vorgesehen sind, die einer zweiflügeligen Tür zugeordnet sind. Bei einer solchen zweiflügeligen Tür ist beim Öffnen bzw. Schließen eine zeitliche Abfolge einzuhalten, da einer der beiden Türflügel vor dem anderen geöffnet bzw. geschlossen werden muss. Diese Koordination der zeitlichen Abfolge kann bevorzugt über die zentrale Steuereinrichtung 16 vorgenommen werden. Alternativ wäre es selbstverständlich auch denkbar, dass die beiden Antriebe 12 selbst miteinander kommunizieren und die zeitliche Abfolge untereinander synchronisieren.

Insgesamt zeigt sich, dass der erfindungsgemäße Antrieb 12 sehr flexibel einsetzbar ist, da alle für den Betrieb des Motors 32 selbst notwendigen Komponenten bereits im Motorgehäuse 22 vorgesehen sind. Insbesondere sind die notwendige Abschalteinrichtung 36 sowie die Motoransteuerung und die Steuereinrichtung im Motorgehäuse 22 vorhanden. Auf diese Art und Weise lassen sich Türantriebe einfacher und flexibler aufbauen. Auch der Austausch von Komponenten des Türantriebs ist einfacher möglich.

An dieser Stelle ist nochmals zu erwähnen, dass die beschriebenen Ausführungsbeispiele eines Antriebssystems 10 nicht nur bei Drehtüren zum Einsatz kommen können, sondern bspw. auch bei Schiebetüren oder anderen Systemen zum Öffnen und Schließen von Gebäudeöffnungen.

Ausführungsformen der Erfindung sind in den angehängten Ansprüchen definiert. Auch wenn die Erfindung ausschließlich durch die Ansprüche festgelegt ist, dienen die folgenden Ausführungsformen dem Verständnis des Hintergrunds und der Vorteile der Erfindung.
Klausel 1. Antrieb (12) für eine Dreh- oder Schiebetür (3), mit
   einem Motorgehäuse (22),
   einem Elektromotor (32), dem eine Motorspannung zuführbar ist,
   einer Steuereinrichtung (24), die ausgebildet ist, den Elektromotor (32), insbesondere durch Verändern der Motorspannung, zu steuern, und
   einer Schnittstelleneinrichtung (26), die mit der Steuereinrichtung (24) verbunden und ausgebildet ist, mit einer externen Steuereinrichtung (16) zu kommunizieren; dadurch gekennzeichnet, dass
   eine Abschalteinrichtung (36) vorgesehen und ausgelegt ist, bei einer Aktivierung den Elektromotor (32) von der Motorspannung zu trennen, und
      der Elektromotor (32), die Steuereinrichtung (24), die Schnittstelleneinrichtung (26) und die Abschalteinrichtung (36) dem Motorgehäuse (22) zugeordnet sind.
Klausel 2. Antrieb nach Klausel 1, dadurch gekennzeichnet, dass die Motorspannung von einer Leistungselektronik (28), insbesondere einer Brückenschaltung, insbesondere einer H-Brückenschaltung (30), bereitgestellt ist, wobei die Leistungselektronik (28) über die Steuereinrichtung (24) steuerbar ist, und wobei die Abschalteinrichtung (36) zwischen Leistungselektronik (28) und Elektromotor (32) oder zwischen Steuereinrichtung (24) und Leistungselektronik (28) vorgesehen ist.
Klausel 3. Antrieb nach Klausel 2, dadurch gekennzeichnet, dass die Abschalteinrichtung (36) zumindest ein elektrisches Schaltelement (38) aufweist, wobei das Schaltelement (38) vorzugsweise ein Relais oder ein Transistor ist.
Klausel 4. Antrieb nach einem der vorhergehenden Klauseln, gekennzeichnet durch eine Überwachungseinrichtung (70), die ausgebildet ist, die Steuereinrichtung (24), die Motorspannung und/oder die Leistungselektronik (28) zu überwachen und in einem Fehlerfall die Abschalteinrichtung (36) zu aktivieren.
Klausel 5. Antrieb nach Klausel 4, dadurch gekennzeichnet, dass die Überwachungseinrichtung (70) eine Watchdog-Schaltung (72) aufweist.
Klausel 6. Antrieb nach einem der vorhergehenden Klauseln, dadurch gekennzeichnet, dass die Steuereinrichtung (24) ausgelegt ist, die Abschalteinrichtung (36) zu aktivieren.
Klausel 7. Antrieb nach einem der vorhergehenden Klauseln, gekennzeichnet durch eine Bremseinrichtung (40), die ausgebildet ist, den Elektromotor (32) bei fehlender
   Motorspannung generatorisch abzubremsen, wobei die Bremseinrichtung (40) dem Motorgehäuse (22) zugeordnet ist.
Klausel 8. Antrieb nach Klausel 7, dadurch gekennzeichnet, dass die Abschalteinrichtung (36) ausgebildet ist, die Bremseinrichtung (40) zu aktivieren.
Klausel 9. Antrieb nach Klausel 7 oder 8, dadurch gekennzeichnet, dass die Steuereinrichtung (24) ausgebildet ist, die Bremseinrichtung (40) zu steuern oder zu regeln.
Klausel 10. Antrieb nach Klausel 7 oder 8, dadurch gekennzeichnet, dass die Bremseinrichtung (40) ein Bremssteuerelement (41) aufweist, das ausgebildet ist, die Bremseinrichtung (40) zu steuern oder zu regeln.
Klausel 11. Antrieb nach einem der Klauseln 7 bis 10, gekennzeichnet durch eine Energierückgewinnungseinrichtung (42), die ausgelegt ist, beim generatorischen Abbremsen eine Spannung zur Versorgung der Steuereinrichtung (24) und/oder der Bremssteuereinrichtung (41) bereitzustellen, wobei die Energierückgewinnungseinrichtung (42) dem Motorgehäuse (22) zugeordnet ist.
Klausel 12. Antrieb nach einem der vorhergehenden Klauseln, dadurch gekennzeichnet, dass zumindest ein dem Elektromotor (32) zugeordneter Drehgeber (34) vorgesehen ist, um der Steuereinrichtung (24) ein Drehwinkelsignal bereitzustellen, welches die absolute und/oder relative Drehwinkelposition eines Rotors des Elektromotors (32) angibt.
Klausel 13. Antrieb nach einem der vorhergehenden Klauseln, dadurch gekennzeichnet, dass die Schnittstelleneinrichtung (27) eine serielle Schnittstelleneinrichtung, insbesondere eine CAN-Bus (Controller Area Network) Schnittstelleneinrichtung, aufweist.
Klausel 14. Antrieb nach einem der vorhergehenden Klauseln, dadurch gekennzeichnet, dass dem Motorgehäuse (22) und/oder dem Motor (32) zumindest ein Temperatursensor zugeordnet ist, der der Steuereinrichtung ein Temperatursignal bereitstellt.
Klausel 15. Antrieb nach einem der Klauseln 1 bis 14, dadurch gekennzeichnet, dass der Elektromotor (32) ein bürstenloser Gleichstrommotor oder ein Torquemotor ist.
Klausel 16. Antrieb nach einem der Klauseln 1 bis 14, dadurch gekennzeichnet, dass der Elektromotor (32) ein Gleichstrom-Bürstenmotor ist.
Klausel 17. Antrieb nach einem der vorhergehenden Klauseln, dadurch gekennzeichnet, dass dem Elektromotor (32) ein weiterer Elektromotor (32) zugeordnet ist, um einen redundanten Antrieb bereitzustellen.
Klausel 18. Antrieb nach einem der Klauseln 1 bis 17, dadurch gekennzeichnet, dass die Steuereinrichtung (24) einen Datenspeicher (25) aufweist, der ausgelegt ist, Parameter, wie Öffnungsweite und Bremszeit, und/oder Fehlerdaten und/oder Herstelldaten und/oder Zyklusdaten zu speichern.
Klausel 19. Antriebssystem (10) für ein oder mehrere Dreh- oder Schiebetüren, mit zumindest einem Antrieb (12) nach einem der Ansprüche 1 bis 18, und
   einer zentralen Steuereinrichtung (16), die eine Schnittstelleneinrichtung (56) zur Kommunikation mit der Schnittstelleneinrichtung (26) des zumindest einen Antriebs (12) aufweist, wobei die zentrale Steuereinrichtung (16) Fahrbefehle erzeugt und diese dem zumindest einen Antrieb (12) sendet.
Klausel 20. Antriebssystem nach Klausel 19, dadurch gekennzeichnet, dass zumindest zwei Antriebe (12) nach einem der Ansprüche 1 bis 18 vorgesehen sind, und die zentrale Steuereinrichtung (16) Fahrbefehle an die zumindest zwei Antriebe sendet.
Klausel 21. Antriebssystem nach Klausel 19, dadurch gekennzeichnet, dass die Steuereinrichtung (24) eines Antriebs (12) einen Fahrbefehl an die Steuereinrichtung (24) eines anderen Antriebs (12) überträgt, um die Anriebe aufeinander abzustimmen.
Klausel 22. Antriebssystem nach Klausel 20 oder 21, dadurch gekennzeichnet, dass die zentrale Steuereinrichtung (16) ausgelegt ist, Fahrbefehle für die zumindest zwei Antriebe so zu erzeugen, dass eine vorbestimmte Schließfolge oder Öffnungsfolge erreicht wird.
Klausel 23. Antriebssystem nach einem der Klauseln 19 bis 22, dadurch gekennzeichnet, dass die zentrale Steuereinrichtung einen Datenspeicher (62) aufweist, der ausgelegt ist, Parameter, wie Öffnungsweite und Bremszeit, und/oder Fehlerdaten und/oder Herstelldaten und/oder Zyklusdaten zu speichern.

**Bezugszeichenliste:**

| | | | |
|---|---|---|---|
| 1 | Türantrieb | 2 | Türsturz |
| 3 | Tür | 4 | Gleitschiene |
| 5 | Arm | 6 | Gehäuse |
| 10 | Antriebssystem | 12 | Antrieb |
| 14 | Schließelement | 16 | Externe/Zentrale Steuereinrichtung |
| 18 | Externe Signalgeber | 20 | Türöffner |
| 22 | Motorgehäuse | 23 | Spg-Versorgung |
| 24 | Steuereinrichtung | 25 | Datenspeicher |
| 26 | Schnittstelle | 28 | Motoransteuerung/Leistungselektronik |
| 30 | H-Brücke | 32 | Motor |
| 34 | Sensor | 36 | Abschalteinrichtung |
| 38 | Schaltelement | 40 | Bremseinrichtung |
| 41 | Bremssteuerelement | 42 | Energierückgewinnungseinrichtung |
| 50 | Steuerung | 52 | Mikrocontroller |
| 56 | Erste Schnittstelle | 57 | CAN Bus |
| 59 | Zweite Schnittstelle | 60 | Drahtgebundene Schnittstelle |
| 62 | Datenspeicher | 64 | Ansteuerungselement Türöffner |
| 68 | Spannungswandler | 70 | Überwachungseinrichtung |
| 72 | Watchdog | | |

## Patentansprüche

1. Antrieb (12) für eine Dreh- oder Schiebetür (3), mit
einem Motorgehäuse (22),
einem Elektromotor (32), dem eine Motorspannung zuführbar ist,
einer Steuereinrichtung (24), die ausgebildet ist, den Elektromotor (32), insbesondere durch Verändern der Motorspannung, zu steuern, und
einer Schnittstelleneinrichtung (26), die mit der Steuereinrichtung (24) verbunden und ausgebildet ist, mit einer externen Steuereinrichtung (16) zu kommunizieren; **dadurch gekennzeichnet, dass**
eine Abschalteinrichtung (36) vorgesehen und ausgelegt ist, bei einer Aktivierung den Elektromotor (32) von der Motorspannung zu trennen, und
der Elektromotor (32), die Steuereinrichtung (24), die Schnittstelleneinrichtung (26) und die Abschalteinrichtung (36) dem Motorgehäuse (22) zugeordnet sind.

2. Antrieb nach Anspruch 1, **dadurch gekennzeichnet, dass** die Motorspannung von einer Leistungselektronik (28), insbesondere einer Brückenschaltung, insbesondere einer H-Brückenschaltung (30), bereitgestellt ist, wobei die Leistungselektronik (28) über die Steuereinrichtung (24) steuerbar ist, und wobei die Abschalteinrichtung (36) zwischen Leistungselektronik (28) und Elektromotor (32) oder zwischen Steuereinrichtung (24) und Leistungselektronik (28) vorgesehen ist.

3. Antrieb nach Anspruch 2, **dadurch gekennzeichnet, dass** die Abschalteinrichtung (36) zumindest ein elektrisches Schaltelement (38) aufweist, wobei das Schaltelement (38) vorzugsweise ein Relais oder ein Transistor ist.

4. Antrieb nach einem der vorhergehenden Ansprüche, **gekennzeichnet durch** eine Überwachungseinrichtung (70), die ausgebildet ist, die Steuereinrichtung (24), die Motorspannung und/oder die Leistungselektronik (28) zu überwachen und in einem Fehlerfall die Abschalteinrichtung (36) zu aktivieren.

5. Antrieb nach Anspruch 4, **dadurch gekennzeichnet, dass** die Überwachungseinrichtung (70) eine Watchdog-Schaltung (72) aufweist.

6. Antrieb nach einem der vorhergehenden Ansprüche, **dadurch gekennzeichnet, dass** die Steuereinrichtung (24) ausgelegt ist, die Abschalteinrichtung (36) zu aktivieren.

7. Antrieb nach einem der vorhergehenden Ansprüche, **gekennzeichnet durch** eine Bremseinrichtung (40), die ausgebildet ist, den Elektromotor (32) bei fehlender Motorspannung generatorisch abzubremsen, wobei die Bremseinrichtung (40) dem Motorgehäuse (22) zugeordnet ist.

8. Antrieb nach Anspruch 7, **dadurch gekennzeichnet, dass** die Abschalteinrichtung (36) ausgebildet ist, die Bremseinrichtung (40) zu aktivieren.

9. Antrieb nach Anspruch 7 oder 8, **dadurch gekennzeichnet, dass** die Steuereinrichtung (24) ausgebildet ist, die Bremseinrichtung (40) zu steuern oder zu regeln.

10. Antrieb nach Anspruch 7 oder 8, **dadurch gekennzeichnet, dass** die Bremseinrichtung (40) ein Bremssteuerelement (41) aufweist, das ausgebildet ist, die Bremseinrichtung (40) zu steuern oder zu regeln.

11. Antrieb nach einem der Ansprüche 7 bis 10, **gekennzeichnet durch** eine Energierückgewinnungseinrichtung (42), die ausgelegt ist, beim generatorischen Abbremsen eine Spannung zur Versorgung der Steuereinrichtung (24) und/oder der Bremssteuereinrichtung (41) bereitzustellen, wobei die Energierückgewinnungseinrichtung (42) dem Motorgehäuse (22) zugeordnet ist.

12. Antrieb nach einem der vorhergehenden Ansprüche, **dadurch gekennzeichnet, dass** zumindest ein dem Elektromotor (32) zugeordneter Drehgeber (34) vorgesehen ist, um der Steuereinrichtung (24) ein Drehwinkelsignal bereitzustellen, welches die absolute und/oder relative Drehwinkelposition eines Rotors des Elektromotors (32) angibt.

13. Antriebssystem (10) für ein oder mehrere Dreh- oder Schiebetüren, mit zumindest einem Antrieb (12) nach einem der Ansprüche 1 bis 12, und
einer zentralen Steuereinrichtung (16), die eine Schnittstelleneinrichtung (56) zur Kommunikation mit der Schnittstelleneinrichtung (26) des zumindest einen Antriebs (12) aufweist, wobei die zentrale Steuereinrichtung (16) Fahrbefehle erzeugt und diese dem zumindest einen Antrieb (12) sendet.

14. Antriebssystem nach Anspruch 13, **dadurch gekennzeichnet, dass** zumindest zwei Antriebe (12) nach einem der Ansprüche 1 bis 12 vorgesehen sind, und die zentrale Steuereinrichtung (16) Fahrbefehle an die zumindest zwei Antriebe sendet.

15. Antriebssystem nach Anspruch 13, **dadurch gekennzeichnet, dass** die Steuereinrichtung (24) eines Antriebs (12) einen Fahrbefehl an die Steuereinrichtung (24) eines anderen Antriebs (12) überträgt, um die Anriebe aufeinander abzustimmen.
